# EUROPÄISCHE PATENTSCHRIFT

(11) **EP 2 746 534 B1**
(45) Veröffentlichungstag und Bekanntmachung des Hinweises auf die Patenterteilung: **31.07.2019**
(21) Anmeldenummer: 12197931.4
(22) Anmeldetag: 19.12.2012
(51) Int. Cl.: F01D 5/14

(54) **Stator- und/oder Rotorstufe einer Strömungsmaschine, sowie zugehörige Gasturbine**
Stator and/or rotor stage of a turbomachine and corresponding gas turbine
Étage statorique et/ou rotorique de turbomachine, et turbine à gaz associée

(43) Veröffentlichungstag der Anmeldung: 25.06.2014
(73) Patentinhaber: MTU Aero Engines AG, 80995 München (DE)
(72) Erfinder: Pirker, Klaus, St, Lambert, J4R2V3 (CA)

(56) Entgegenhaltungen:
- EP-A2- 0 976 928
- EP-A2- 2 261 463
- EP-B1- 0 745 755

## Beschreibung

Die Erfindung betrifft eine Stator- und/oder Rotorstufe einer Strömungsmaschine, insbesondere eine Gasturbine eines Flugzeugtriebwerks, mit mindestens einer Schaufel und mindestens einer strömungsbegrenzenden Wand, wobei die Schaufel eine Anströmkante und eine Austrittskante umfasst und zumindest mit einem radialen Ende mit der Wand verbunden ist und mit mindestens einem von der Schaufel beabstandeten und an der Wand angeordneten sowie sich in ein Strömungsvolumen erstreckenden Vorsprung.

In Axialströmungsmaschinen werden alternierend Rotor- sowie Statorstufen in einem Axialverdichter und/oder einer Axialturbine angeordnet. Bei Axialverdichtern wird versucht, in jeder Stufe einen möglichst hohen Druckaufbau zu erzielen, um den Wirkungsgrad der Strömungsmaschine zu erhöhen. Dabei umfasst üblicherweise ein Axialverdichter mehrere Stator- und Rotorstufen, wobei diese wiederum eine Vielzahl von in Umfangsrichtung gleichmäßig beabstandeten Stator- und Rotorschaufeln aufweisen. Dabei sind die Stator- und Rotorschaufeln derart zueinander angeordnet, dass sich die Saugseite der einen Stator- beziehungsweise Rotorschaufel der Druckseite der jeweils benachbarten weiteren Stator- beziehungsweise Rotorschaufel zuwendet. Zwischen jeweils zwei benachbarten Stator-/Rotorschaufeln kommt es zu einer so genannten Sekundärströmung, die sich entlang der mit der jeweiligen Schaufel verbundenen Wand von einer Druckseite der einen Stator-/Rotorschaufel zu der Saugseite der jeweils benachbarten Stator-/Rotorschaufel ausbildet. Durch diese Sekundärströmung kann es zu einer Ablösung der Strömung in bestimmten Eckbereichen der Stator- und/oder Rotorschaufel kommen. Um dies zu verhindern beziehungsweise einzudämmen, wird in der EP 0 976 928 A2 vorgeschlagen, einen so genannten Hilfsflügel auf die Oberfläche der strömungsbegrenzenden Wand im Bereich der Eckenströmung der Schaufeln anzubringen. Durch eine entsprechende Wirbelbildung wird über diesen Hilfsflügel zusätzlich ein schnell strömendes Fluid der entsprechend benachbarten beziehungsweise zugeordneten Schaufeloberfläche im Bereich der langsamen Eckenströmung zugeführt, sodass diese beschleunigt und so am Ablösen gehindert wird. Nachteilig an dieser genannten Schaufelanordnung ist jedoch, dass im Bereich der Schaufelfüße und insbesondere im Bereich der Austrittskanten der Schaufeln im Übergang zu den entsprechenden Wandbereichen sehr hohe Drücke auftreten, die die Lebensdauer der Stator- und/oder Rotorstufe negativ beeinflusst. Um diesen Effekt zu verringern, wird in der EP 0 745 755 B1 vorgeschlagen, die Austrittskante entsprechender Schaufeln in diesen Bereichen mit einer Einbuchtung zu versehen. Dadurch können die auftretenden Drücke vermindert werden, jedoch treten hierbei wiederum die genannten Sekundärströmungen auf, die sich nachteilig auf den Wirkungsgrad der Strömungsmaschine auswirken.

Die EP 2 261 463 A1 offenbart den Oberbegriff des Patentanspruchs 1.

Aufgabe der vorliegenden Erfindung ist es, eine Stator- und/oder Rotorstufe der eingangs genannten Art zu schaffen, welche einerseits einen erhöhten Wirkungsgrad einer Strömungsmaschine gewährleistet und andererseits eine erhöhte Lebensdauer aufweist. Eine weitere Aufgabe der Erfindung ist es, eine entsprechende Gasturbine mit einem verbesserten Wirkungsgrad einer erhöhten Lebensdauer zu schaffen.

Die Aufgaben werden erfindungsgemäß durch eine Stator- und/oder Rotorstufe mit den Merkmalen des Patentanspruchs 1 und eine Gasturbine mit den Merkmalen des Patentanspruchs 10 gelöst. Vorteilhafte Ausgestaltungen der Erfindung sind in den jeweiligen Unteransprüchen angegeben, wobei vorteilhafte Ausgestaltungen der Stator- und/oder Rotorstufe als vorteilhafte Ausgestaltungen der erfindungsgemäßen Gasturbine anzusehen sind. Ebenso sind vorteilhafte Ausgestaltungen der erfindungsgemäßen Gasturbine als vorteilhafte Ausgestaltungen der Stator- und/oder Rotorstufe anzusehen.

Bei einer erfindungsgemäßen Stator- und/oder Rotorstufe einer Strömungsmaschine, insbesondere einer Gasturbine eines Flugzeugtriebwerks, ist mindestens eine Schaufel und mindestens eine strömungsbegrenzende Wand ausgebildet, wobei die Schaufel eine Anströmkante und eine Austrittskante umfasst und zumindest mit einem radialen Ende mit der Wand verbunden ist. Zudem weist die Stator- und/oder Rotorstufe mindestens einen von der Schaufel beabstandeten und an der Wand angeordneten sowie sich in ein Strömungsvolumen erstreckenden Vorsprung auf, wobei der Vorsprung im Bereich einer Einbuchten der Austrittskante der Schaufel angeordnet ist. Durch die erfindungsgemäße Anordnung kann einerseits der Wirkungsgrad der Stator- und/oder Rotorstufe durch ein Verhindern der Eckenablösung der Strömung in entsprechenden Eckbereichen der Stator- und Rotorschaufeln verhindert werden, sodass der Wirkungsgrad der erfindungsgemäßen Stator- und/oder Rotorstufe deutlich erhöht wird. Zudem gewährleistet die Ausbildung von mindestens einer Einbuchtung in einer Austrittskante der Schaufel eine deutlich erhöhte Lebensdauer durch die Verminderung von in diesem Bereichen auftretenden Drücken. Erfindungsgemäß ist der Vorsprung im Bereich dieser Einbuchtung der Austrittskante der Schaufel angeordnet. Die Einbuchtung kann dabei in einem radial außen liegenden Bereich und/oder radial innen liegenden Bereich der Austrittskante ausgebildet sein.

In der erfindungsgemäßen Stator- und/oder Rotorstufe ist der Vorsprung plattenartig ausgebildet. Dabei kann der Vorsprung eine Anströmkante und eine Austrittskante aufweisen. Die Anströmkante des Vorsprungs kann wiederum gerade oder gekrümmt ausgebildet sein. Zudem kann sich der Vorsprung im Wesentlichen senkrecht von der Wand in das Strömungsvolumen hineinerstrecken. Grundsätzlich ist eine Vielzahl von Ausgestaltungen des Vorsprungs möglich. Diese hängen insbesondere von den jeweiligen Strömungsverhältnissen und der Ausgestaltung der Einbuchtung der Austrittskanten der entsprechenden Schaufeln ab und können entsprechend optimiert werden, sodass insbesondere keine Eckenablösung der Strömung erfolgt.

In einer weiteren vorteilhaften Ausgestaltung der erfindungsgemäßen Stator- und/oder Rotorstufe ist der Vorsprung einstückig mit der strömungsbegrenzenden Wand ausgebildet. Dadurch ergeben sich fertigungstechnische Vorteile, die zu einer Verringerung der Herstellungskosten der erfindungsgemäßen Stator- und/oder Rotorstufe führen.

In weiteren vorteilhaften Ausgestaltungen der erfindungsgemäßen Stator- und/oder Rotorstufe ist die strömungsbegrenzende Wand aus einer Innenseite einer Außenwand der Stator- und/oder Rotorstufe und/oder aus einer Außenseite einer Rotornabe der Stator- und/oder Rotorstufe gebildet. Je nach Anforderung können die Vorsprünge wie auch die genannten Einbuchtungen der Austrittskanten der Schaufeln an oder im Bereich entsprechender Wand- oder Nabenelemente der Strömungsmaschine angeordnet sein. So kann beispielsweise die erfindungsgemäße Stator- und/oder Rotorstufe Teil eines Axialverdichters oder einer Axialturbine sein.

Die Erfindung betrifft weiterhin eine Gasturbine, insbesondere ein Flugzeugtriebwerk mit mindestens einer Stator- und/oder Rotorstufe, welche mindestens eine Schaufel und mindestens eine strömungsbegrenzende Wand umfasst, wobei die Schaufel eine Anströmkante und eine Austrittskante aufweist und zumindest mit einem radialen Ende mit der Wand verbunden ist. Zudem weist die Stator- und/oder Rotorstufe mindestens einen von der Schaufel beabstandeten und an der Wand angeordneten sowie sich in ein Strömungsvolumen erstreckenden Vorsprung auf, wobei der Vorsprung im Bereich einer Einbuchtung der Austrittskante der Schaufel angeordnet ist. Durch die erfindungsgemäße Ausgestaltung eines Vorsprungs im Bereich einer Einbuchtung der Austrittskante der Schaufel kann einerseits der Wirkungsgrad der Gasturbine und andererseits deren Lebensdauer, insbesondere der Wirkungsgrad und die Lebensdauer der Stator- und/oder Rotorstufe verbessert werden.

Weitere Ausgestaltungen der Stator- und/oder Rotorstufe der erfindungsgemäßen Gasturbine wurden im Vorhergehenden beschrieben.

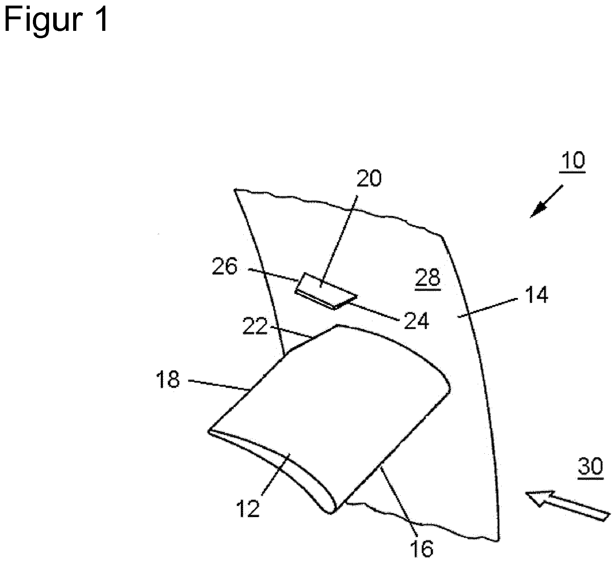

Weitere Merkmale der Erfindung ergeben sich aus den Ansprüchen, dem Ausführungsbeispiel sowie anhand der Zeichnung. Die vorstehend in der Beschreibung genannten Merkmale und Merkmalskombinationen sowie die nachfolgend in dem Ausführungsbeispiel genannten Merkmale und Merkmalskombinationen sind nicht nur in der jeweils angegebenen Kombination, sondern auch in anderen Kombinationen verwendbar, ohne den Rahmen der Erfindung zu verlassen.

Dabei zeigt die Figur eine abschnittsweise, schematische Perspektivansicht einer erfindungsgemäßen Statorstufe.

Die in der Figur teilweise dargestellte Statorstufe 10 umfasst eine Schaufel 12, nämlich eine Leitschaufel, welche mit ihrem radial äußeren Ende mit einer strömungsbegrenzenden Wand 14 verbunden ist. Die Wand 14 ist in dem dargestellten Ausführungsbeispiel das Gehäuse eines Axialverdichters einer Strömungsmaschine, insbesondere eines Flugzeugtriebwerks. Man erkennt, dass die Schaufel 12 an einer entsprechenden Innenseite 28 der Außen- beziehungsweise Gehäusewand 14 angeordnet ist. Dabei kann die Schaufel 12 einstückig mit der Wand 14 ausgebildet sein. Des Weiteren erkennt man, dass die Schaufel 12 eine Anströmkante 16 und eine Austrittskante 18 aufweist, die in einem entsprechenden Strömungsvolumen 30 der Strömungsmaschine ausgerichtet sind. Des Weiteren wird deutlich, dass die Austrittskante 18 im Bereich zum Übergang mit der Wand 14, nämlich im radial außen liegenden Bereich der Austrittskante 18 eine Einbuchtung 22 aufweist. Die Einbuchtung 22 dient zur Verringerung von im Übergangsbereich zwischen der Schaufel 12 und der Wand 14 im Bereich der Austrittskante 18 auftretenden Drücken. Des Weiteren wird deutlich, dass im Bereich der Einbuchtung 22 ein Vorsprung 20 von der Schaufel 12 beabstandet und an der Wand 14 angeordnet ausgebildet ist. Der Vorsprung 20 ist dabei zwischen der dargestellten Schaufel 12 und einer weiteren, nicht dargestellten und in Umfangsrichtung angeordneten Schaufel der Statorstufe 10 angeordnet.

In dem dargestellten Ausführungsbeispiel ist der Vorsprung 20 erfindungsgemäß plattenförmig und in Blickrichtung auf den Vorsprung 20 und parallel zur Wand 14 trapezförmig ausgebildet. Es sind jedoch auch andere Vieleckformen denkbar. Zudem bildet der Vorsprung 20 ebenfalls eine Anströmkante 24 und eine Austrittskante 26 aus. Entsprechend den jeweiligen Anforderungen können die Anström- und Austrittskanten 24, 26 des Vorsprungs 20 zu den Anström- und Austrittskanten 16, 18 der Schaufel 12 ausgerichtet werden. Grundsätzlich wird der Vorsprung 20 derart relativ zur Einbuchtung 22 der Schaufel 12 angeordnet, dass es zu keinem Ablösen des Strömungsverlaufs in diesen Bereichen kommt. Die Ausrichtung des Vorsprungs 20 relativ zur Schaufel 12 kann den jeweiligen Strömungsverhältnissen angepasst werden. Die Anström- und Austrittskante 24, 26 des Vorsprungs 20 können gerade oder gekrümmt ausgebildet sein. In dem dargestellten Ausführungsbeispiel erstreckt sich der Vorsprung 20 im Wesentlichen senkrecht von der strömungsbegrenzenden Wand 14 in das Strömungsvolumen 30 hinein. Es ist aber auch denkbar, dass der Vorsprung 20 in einem Winkel zu der Wand 14 in das Strömungsvolumen hineinragt. Zudem kann der Vorsprung 20 mit der Wand 14 einstückig ausgebildet sein. Er kann aber auch mit dieser verschweißt, verlötet oder anders verbunden werden.

Die Höhe und Länge des Vorsprungs 20 kann ebenfalls variiert werden. Die Höhe des Vorsprungs ist jedoch immer kleiner als die entsprechende Höhe der Schaufel 12.

## Patentansprüche

1. Stator- und/oder Rotorstufe einer Strömungsmaschine, insbesondere einer Gasturbine eines Flugzeugtriebwerks, mit mindestens einer Schaufel (12) und mindestens einer strömungsbegrenzenden Wand (14), wobei die Schaufel (12) eine Anströmkante (16) und eine Austrittskante (18) umfasst und zumindest mit einem radialen Ende mit der Wand (14) verbunden ist, wobei die Austrittskante im Bereich zu einem Übergang mit der Wand eine Einbuchtung (22) aufweist, und mit mindestens einem von der Schaufel (12) beabstandeten und an der Wand (14) angeordneten sowie sich in ein Strömungsvolumen (30) erstreckenden Vorsprung (20), wobei der Vorsprung (20) im Bereich der Einbuchtung (22) der Austrittskante (18) der Schaufel (12) angeordnet ist **dadurch gekennzeichnet, dass** der Vorsprung (20) plattenartig ausgebildet ist.

2. Stator- und/oder Rotorstufe nach Anspruch 1, **dadurch gekennzeichnet, dass** die Einbuchtung (22) in einem radial innen liegenden Bereich und/oder radial außen liegenden Bereich der Austrittskante (18) ausgebildet ist.

3. Stator- und/oder Rotorstufe nach einem der vorhergehenden Ansprüche, **dadurch gekennzeichnet, dass** der Vorsprung (20) eine Anströmkante (24) und eine Austrittskante (26) aufweist.

4. Stator- und/oder Rotorstufe nach Anspruch 3, **dadurch gekennzeichnet, dass** die Anströmkante (24) und/oder die Austrittskante (26) des Vorsprungs (20) gerade oder gekrümmt ausgebildet ist.

5. Stator- und/oder Rotorstufe nach einem der vorhergehenden Ansprüche, **dadurch gekennzeichnet, dass** der Vorsprung (20) sich im Wesentlichen senkrecht von der Wand (14) in das Strömungsvolumen (30) erstreckt.

6. Stator- und/oder Rotorstufe nach einem der vorhergehenden Ansprüche, **dadurch gekennzeichnet, dass** der Vorsprung (20) einstückig mit der Wand (14) ausgebildet ist.

7. Stator- und/oder Rotorstufe nach einem der vorhergehenden Ansprüche, **dadurch gekennzeichnet, dass** die Wand (14) aus einer Innenseite (28) einer Außenwand der Stator- und/oder Rotorstufe (10) und/oder aus einer Außenseite einer Rotornabe der Stator- und/oder Rotorstufe (10) gebildet ist.

8. Stator- und/oder Rotorstufe nach Anspruch 7, **dadurch gekennzeichnet, dass** die Stator- und/oder Rotorstufe (10) Teil eines Axialverdichters oder einer Axialturbine ist.

9. Gasturbine, insbesondere Flugzeugtriebwerk, mit mindestens einer Stator- und/oder Rotorstufe (10) nach mindestens einem der obigen Ansprüche.

## Claims

1. Stator and/or rotor stage of a turbomachine, in particular of a gas turbine of an aircraft engine, comprising at least one blade (12) and at least one flow-limiting wall (14), the blade (12) comprising a leading edge (16) and a trailing edge (18) and being connected to the wall (14) at least at one radial end, the trailing edge having an indentation (22) in the region of a transition with the wall, and comprising at least one projection (20) which is spaced apart from the blade (12), is arranged on the wall (14) and extends into a flow volume (30), the projection (20) being arranged in the region of the indentation (22) of the trailing edge (18) of the blade (12), **characterized in that** the projection (20) is plate-shaped.

2. Stator and/or rotor stage according to claim 1, **characterized in that** the indentation (22) is formed in a radially inner region and/or radially outer region of the trailing edge (18).

3. Stator and/or rotor stage according to either of the preceding claims, **characterized in that** the projection (20) has a leading edge (24) and a trailing edge (26).

4. Stator and/or rotor stage according to claim 3, **characterized in that** the leading edge (24) and/or the trailing edge (26) of the projection (20) is straight or curved.

5. Stator and/or rotor stage according to any of the preceding claims, **characterized in that** the projection (20) extends substantially perpendicularly from the wall (14) into the flow volume (30).

6. Stator and/or rotor stage according to any of the preceding claims, **characterized in that** the projection (20) is integral with the wall (14).

7. Stator and/or rotor stage according to any of the preceding claims, **characterized in that** the wall (14) is formed from an inner face (28) of an outside wall of the stator and/or rotor stage (10) and/or from an outer face of a rotor hub of the stator and/or rotor stage (10).

8. Stator and/or rotor stage according to claim 7, **characterized in that** the stator and/or rotor stage (10) is part of an axial compressor or an axial turbine.

9. Gas turbine, in particular an aircraft engine, comprising at least one stator and/or rotor stage (10) according to at least one of the above claims.

## Revendications

1. Étage statorique et/ou rotorique de turbomachine, notamment de turbine à gaz d'un moteur d'avion, comportant au moins une aube (12) et au moins une paroi (14) de limitation d'écoulement, l'aube (12) comprenant un bord d'attaque (16) et un bord de fuite (18) et étant reliée à la paroi (14) au moins à une extrémité radiale, le bord de fuite présentant un évidement (22) dans la zone de transition avec la paroi, et au moins une saillie (20) espacée de l'aube (12), disposée sur la paroi (14) et s'étendant dans un volume d'écoulement (30), la saillie (20) étant disposée dans la zone de l'évidement (22) du bord de fuite (18) de l'aube (12), **caractérisé en ce que** la saillie (20) est réalisée en forme de plaque.

2. Étage statorique et/ou rotorique selon la revendication 1, **caractérisé en ce que** l'évidement (22) est réalisé dans une zone radialement intérieure et/ou radialement extérieure du bord de fuite (18).

3. Étage statorique et/ou rotorique selon l'une des revendications précédentes, **caractérisé en ce que** la saillie (20) présente un bord d'attaque (24) et un bord de fuite (26).

4. Étage statorique et/ou rotorique selon la revendication 3, **caractérisé en ce que** le bord d'attaque (24) et/ou le bord de fuite (26) de la saillie (20) sont de forme droite ou incurvée.

5. Étage statorique et/ou rotorique selon l'une des revendications précédentes, **caractérisé en ce que** la saillie (20) s'étend de manière sensiblement perpendiculaire à la paroi (14) dans le volume d'écoulement (30).

6. Étage statorique et/ou rotorique selon l'une des revendications précédentes, **caractérisé en ce que** la saillie (20) est réalisée d'une seule pièce avec la paroi (14).

7. Étage statorique et/ou rotorique selon l'une des revendications précédentes, **caractérisé en ce que** la paroi (14) est formée à partir d'une face intérieure (28) d'une paroi extérieure de l'étage statorique et/ou rotorique (10) et/ou à partir d'une face extérieure d'un moyeu de rotor de l'étage statorique et/ou rotorique (10).

8. Étage statorique et/ou rotorique selon la revendication 7, **caractérisé en ce que** l'étage statorique et/ou rotorique (10) fait partie d'un compresseur axial ou d'une turbine axiale.

9. Turbine à gaz, moteur d'avion notamment, comportant au moins un étage statorique et/ou rotorique (10) selon au moins l'une des revendications précédentes.
